Europäisches Patentamt

(19) European Patent Office

Office européen des brevets

(11) Publication number: **0 457 520 A2**

(12) # EUROPEAN PATENT APPLICATION

(21) Application number: **91304248.7**

(51) Int. Cl.⁵: **B60N 2/38, A47C 7/14**

(22) Date of filing: **10.05.91**

(30) Priority: **16.05.90 GB 9010916**

(43) Date of publication of application:
**21.11.91 Bulletin 91/47**

(84) Designated Contracting States:
**BE DE ES FR IT LU NL SE**

(71) Applicant: **KAB SEATING LIMITED**
**Round Spinney**
**Northampton NN3 4RS (GB)**

(72) Inventor: **Bates, Michael Edward**
**22 Stonehill Way**
**Brixworth, Northamptonshire (GB)**

(74) Representative: **Knott, Stephen Gilbert et al**
**MATHISEN, MACARA & CO. The Coach House**
**6-8 Swakeleys Road**
**Ickenham Uxbridge Middlesex UB10 8BZ (GB)**

(54) **Seat suspension system.**

(57) A seat suspension system includes a pair of springs (15,17) effective to cause two pairs of pivoted arms (1,2 and 3,4) to adjust the height of the system dependent on a load carried by a seat (5) supported by the system. A motor (25) is effective to adjust the force exerted by the springs (15,17) so as to cause the system to move towards a predetermined mid-travel position.

EP 0 457 520 A2

Fig.3.

This invention relates to seat suspension systems, and has particular, although not exclusive, relevance to seat suspension systems for use in vehicles.

Known vehicle seat suspension systems comprise at least one pair of arms pivoted together in a scissor-type arrangement. One end of each of the arms are connected by an extension spring. A hand wheel, situated at the front or side of the system, is arranged to adjust the extension of the spring and thus the force exerted by the spring in order to adjust the load-bearing capability of a seat supported by the system.

Such a system suffers the disadvantage, however, that it is necessary to manually adjust the load-bearing capability of the system. This is time consuming and it is also possible that a user may omit to adjust the system, for example when using the seat for the first time.

Furthermore, whilst a dial may be incorporated on the hand wheel, the dial being calibrated in the user's weight to approximately position the suspension at mid-travel of the suspension stroke, a user may not know what load is to be carried by the system thus leading to a less than optimum use of the system.

Whilst it is possible to use a pneumatic system to effect automatic control of such a suspension system, not all vehicles have a pneumatic system available.

It is an object of the present invention to provide a seat suspension system in which the above difficulties are, at least, alleviated.

According to the present invention there is provided a seat suspension system comprising a spring means and a mechanical linkage, the spring means being effective to cause the mechanical linkage to adjust the equilibrium height of the system dependent on the load carried by a seat supported by the system, and a motor effective to adjust the force exerted by the spring means so as to cause the equilibrium height of the system to move towards a predetermined height.

Thus, by use of such a motor a system may be made totally automatic, obviating the need for adjustment by a user of the system. Alternatively, the system may be arranged so as to enable variable adjustment of the load bearing capability of the seat to be performed by the user with the aid of the motor.

The system preferably incorporates a switching means responsive to the load carried by the seat to cause the motor to adjust the force exerted by the spring means. This switching means suitably comprises a microswitch arrangement responsive to the position of part of the mechanical linkage.

Thus, the motor may be used to enable accurate adjustment of the system with variable loading on the seat.

The mechanical linkage suitably comprises at least one pair of pivoted arms effective to support the seat, the spring means being effective to adjust the angle between the arms. The arms are suitably arranged in a scissor-type configuration.

One seat suspension system in accordance with the invention for use in a vehicle will now be described, by way of example only, with reference to the accompanying drawings, in which:-

Figure 1 is a schematic diagram of a vehicle seat suspended by a conventional suspension system, the diagram illustrating the principle of operation of the conventional suspension system;

Figure 2 is a schematic diagram of a vehicle seat suspended by a suspension system in accordance with an embodiment of the present invention, the diagram illustrating the principle of operation of this suspension system;

Figure 3 is a more detailed, partially sectioned side view of a suspension system having the same mode of operation as that shown in Figure 2;

Figure 4 is a view of a trunnion incorporated in the system shown in Figure 3, as seen in the direction of the arrow IV in Figure 3; and

Figure 5 is an end view of the system shown in Figure 3, as seen in the direction of the arrow IV in Figure 3, with some components being omitted from the view for the sake of clarity.

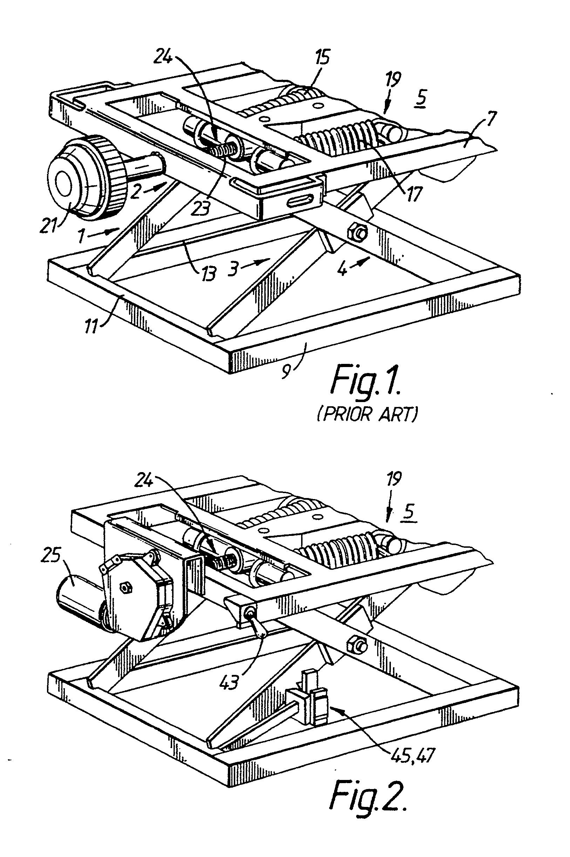

Referring firstly to Figure 1, a known vehicle seat suspension system comprises two pairs of pivoted arms, 1,2 and 3,4, each pair of arms being arranged in a scissor type configuration. The forwardly directed upper ends of the arms 2,4 are pivoted to an upper frame member 5 which is arranged to support a vehicle seat 5, only part of the seat being shown for the sake of clarity. The lower ends of the arms 1,2;3,4 are contained within a lower frame member 9, the forwardly directed lower ends of the arms 1,3 being pivoted to a bar 11 whilst the rearwardly directed lower ends of the arms 2,4 carry extensions (not shown) which are a slidable fit in grooves 13 formed on the side members of the lower frame member 9. A pair of extension springs 15,17 are fixedly mounted to the upper frame 7 via a trunnion 24, the other end of the springs being attached to movable anchor pivots 19. The anchor pivots 19 are mounted such that the springs 15,19 control the angle between the pairs of arms 3 and 4 or 1 and 2, and thus the height of the suspension system. A hand wheel 21 located at the front of the suspension unit is arranged to turn a screwthread 23 through the trunnion 24. The hand wheel 21 is thus effective to extend or reduce the length of the springs 15,17 changing the force supporting the seat 5 and any load carried by the seat.

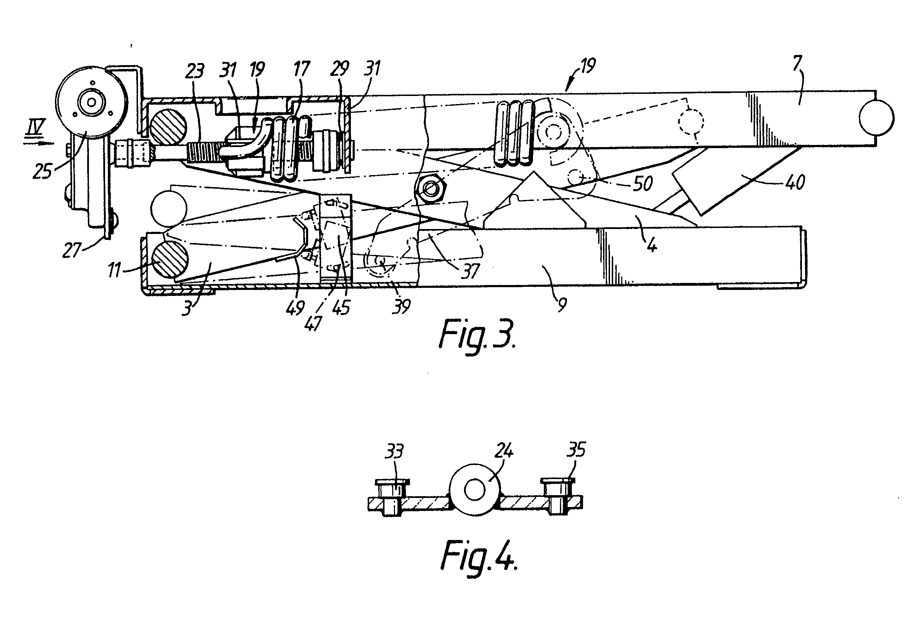

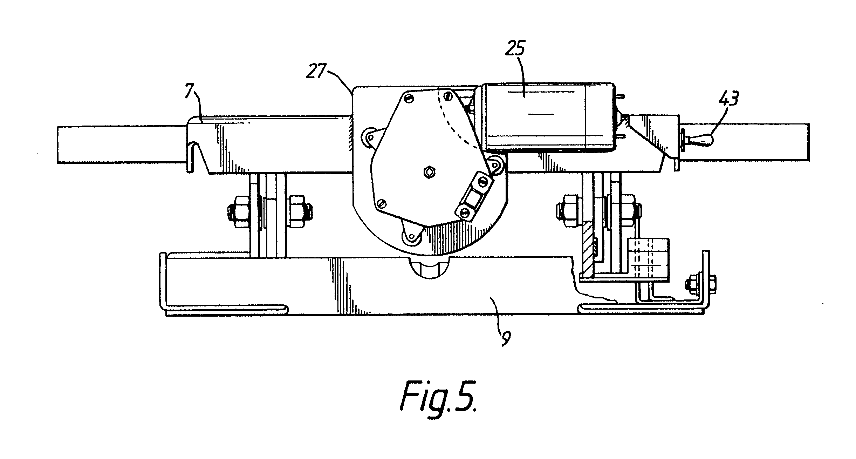

Referring now to Figure 2, in which like components to those of Figure 1 are correspondingly labelled, in the suspension system in accordance with the embodiment of the invention, the hand wheel 21 is replaced by a motor 25. Referring now also to Figures 3,4 and 5, the motor 25 is supported from the upper frame member 5 by a bracket 27, the motor being arranged to turn the screwthread 23 through the trunnion 24. The end of the screwthread 23 remote from the motor 25 is carried in a thrust-bearing 29 supported by a bracket 31 from the upper frame member 7.

As best seen in Figure 4, the trunnion 24 carries appendages 33,35 on each of which is mounted one end of a respective spring 15 or 17. A lever arm 37 carries the anchor pivots 19 to which the opposite ends of the springs 15,17 are attached, the lever arm 37 being pivoted at 50. The lower end of the lever arm 37 carries a roller 39 which contacts the baseplate within the lower frame member 9.

Operation of the motor 25, causing movement of the screwthread 23 through the trunnion 24, will lead to movement of the anchor pivots 19, thus causing a corresponding movement of the lever arm 37. This leads to either a raising or a lowering of the upper frame member 7. A damper 40 is arranged to damp the movement of the suspension.

The motor 25 may be operated either manually by means of a lever switch 43, or automatically by means of upper and lower microswitches 45,47. The microswitches 45,47 are disposed in the lower frame member 9 and are arranged to cooperate with a shaped bracket carried by the arm 3, so as to be responsive to the position of the arm 3 to switch the motor on and off.

Thus the seat suspension system, in accordance with the embodiment of the invention, may be operated in a number of ways. The system may first of all be operated fully automatically. Thus, for example, when the occupant of the seat 5 moves from the seat the reduced load on the springs 15,17 will cause the suspension unit to move upwards. Detection of this movement by the upper microswitch 45 will cause the motor 25 to operate so as to adjust the forces exerted by the springs 15,17 on the arms 1,3,37 to reposition the suspension at the mid-travel position. Likewise, when an occupant sits on the seat 5 the motor 25 will operate to cause the forces exerted by the springs 15,17 to increase so as to cause the suspension unit to return to the mid-travel position.

It will be appreciated that due to friction in the suspension system and the form of the shaped bracket 49 on the arm 3, there will be a dead band about the mid-travel position of the suspension system in which the system will be insensitive to small changes in the load carried by the seat 5. This also means that the microswitches 45,47 will stop or start the motor 25 outside the dead band and not in the exact mid-travel position. This should not generally be a problem however.

In order to operate the system as a semi-automatic system, the occupant of the seat 5 may operate the lever switch 43 upwardly to increase the loading on the suspension system, i.e. so that the suspension arranges itself beneath the mid-travel position. Alternatively, the occupant may move the lever switch 43 downwards to reduce the loading on the system. The motor 25 will correspondingly adjust the forces exerted by the springs 15,17 until one of the microswitches 45 or 47 is opened so as to stop the motor with the suspension at the mid-travel position. The lower microswitch 47 is arranged so that if the suspension is already beneath the mid-travel position, operation of the lever switch 43 downwards will not cause the motor 25 to lower the suspension system still further. Thus the motor 25 can then only operate if the lever switch 43 is lifted so as to raise the suspension to the mid-travel position. Likewise, when the suspension is above the mid-travel position, as detected by the upper microswitch 45, the motor 25 will not operate to raise the suspension system still further but will only operate to reduce the loading on the system and lower the suspension to the mid-travel position.

It will be appreciated that the system may also be operated as a fully manually controlled system, the microswitches 45,47 not being used. Thus the occupant of the seat 5 may use the lever switch 43 to stop the motor at the approximate mid-travel position, an indicator (not shown) being fitted to the system to provide an indication of when this position is reached. To prevent over-travelling of the trunnion 24 during such manual operation, further microswitches (not shown) may be fitted at the extremities of the permissible trunnion movement, operation of these switches being effective to stop the motor 25.

It will also be appreciated that the movement of the suspension system during use of the vehicle in which a system is fitted may continually cause the motor 25 to operate. To avoid this a delay may suitably be built into the system.

It will also be appreciated that whilst a seat suspension system in accordance with the invention finds particular application in the suspension of vehicle seats, the invention is also applicable to other seat suspension systems.

## Claims

1. A seat suspension system comprising: a spring means (15,17) and a mechanical linkage (1,2,3,4), the spring means being effective to cause the mechanical linkage (1,2,3,4) to adjust the equilibrium height of the system dependent on the load carried by a seat (5) supported by the system, the system being characterised in that it includes a motor (25) effective to adjust the force exerted by the spring means (15,17) so as to cause the equilibrium height of the system to move towards a predetermined height.

2. A seat suspension system according to claim 1, incorporating a switching means (45, 47) responsive to the load carried by the seat (5) to cause the motor (25) to adjust the force exerted by the spring means (15,17).

3.   A seat suspension system according to claim 2, in which the switching means (45,47) comprises a microswitch arrangement responsive to the position of part of the mechanical linkage (1,2,3,4).

4.   A seat suspension system according to any one of the preceding claims, in which the mechanical linkage (1,2,3,4) comprises at least one pair of pivoted arms effective to support the seat (5), the spring means (15,17) being effective to adjust the angle between the arms.

5.   A seat suspension system according to claim 4, in which the arms (1,2,3,4) are arranged in a scissor-type configuration.

6.   A seat suspension system according to any one of the preceding claims, including a manually operative lever (43) effective to cause the motor to adjust said force.

Fig.1.
(PRIOR ART)

Fig.2.

EP 0 457 520 A2

Fig.3.

Fig.4.

*Fig.5.*